# EUROPEAN PATENT SPECIFICATION

(11) **EP 1 541 042 B1**
(45) Date of publication and mention of the grant of the patent: **17.05.2006**
(21) Application number: 03771396.3
(22) Date of filing: 29.07.2003
(51) Int. Cl.: A23L 2/52, A23L 2/38, A61K 9/00, A23L 1/0532, A23L 1/30, A23L 1/305, A23L 1/06

(54) **GEL-TYPE DRINK COMPOSITION**
GELFÖRMIGE GETRÄNKEZUSAMMENSETZUNG
COMPOSITION DE BOISSON SOUS FORME GELIFIEE

(30) Priority: 29.07.2002 JP 2002220194
(43) Date of publication of application: 15.06.2005
(73) Proprietor: OTSUKA PHARMACEUTICAL CO., LTD., Chiyoda-ku Tokyo 101-8535 (JP)
(72) Inventor: TAKAICHI, Akihisa, Naruto-shi, Tokushima 772-0051 (JP); OKAMOTO, Toshihiko, Tokushima-shi, Tokushima 779-3122 (JP); WATANABE, Yoshinari, Takasaki-shi, Gunma 370-0047 (JP); HIRATA, Keizaburou, Tokushima-shi, Tokushima 771-0117 (JP); MATSUOKA, Kunihiko, Ito Rejidensu 401, Tokushima-shi, Tokushima 770-0863 (JP)
(74) Representative: HOFFMANN EITLE
(86) International application number: PCT/JP2003/009571
(87) International publication number: WO 2004/010796

(56) References cited:
- EP-A- 1 046 347
- WO-A1-91/03948
- JP-A- 11 075 726
- JP-A- 11 206 351
- US-A- 3 867 560
- US-A- 5 376 396

## Description

The present invention relates to a gel beverage composition for comprehensive nutritional supplementation, more particularly a tasty gel beverage composition that contains a balance of the three major nutrients, saccharide, fat and protein, has a soft gel form and refreshing sensation.

### BACKGROUND OF THE INVENTION

Various nutritional supplement beverage and food products (nutritional foods) in liquid and solid form have been researched and developed. These nutritional food products, containing necessary daily nutrients, are used for supplementing meals or quickly replenishing the energy expended during sports or while working.

The inventors have previously developed a comprehensive nutritional composition in the form of a highly viscous solution which contains balanced important nutrients (Japanese Examined Patent Publication No. 1994-83653). Eating this composition can improve an unbalanced diet, appropriately supply the energy and nutrients necessary for daily life, and prevent and treat (prevent aggravation of) various diseases caused by excessive calorie intake (such as obesity), for example, diabetes, hypertension and heart diseases. However, said composition is disadvantageous in that it is in the form of a highly viscous liquid having nearly neutral pH and is unlikely to match today's consumer preference.

In recent years, new food products, jellylike beverages of various kinds, have been available on the consumer soft drink market. These beverages are provided in the form of jellies, which are to be crushed by, for example, shaking, before drinking. Their unique drinking qualities, i.e., interesting swallowing characteristics and textural properties, suit the tastes of today's consumers and attract their attention. Although these jellylike beverages have an acidic pH close to that of ordinary soft drinks and thus have good storage stability, they are substantial free of proteins or fats. That is, they do not have a well-balanced makeup adequate for comprehensive nutritional supplementation.

Publication WO99/34690 discloses a nutritional gel food designed for patients with dysphagia and a method for preparing the same. This gel food contains nutrients such as proteins and fats in good balance and is adjusted to have an acidic pH, thus giving refreshing sensation. The gel food is also easy to drink (easily swallowable). However, it is essential that the food is a composite of an isoelectric gel of protein (gel formed with protein) and a gelling agent(thickening agent) such as pectin or xanthan gum. This causes the following difficulties: because the gel is prepared by coagulating protein (gelation), homogenizing the coagulated protein, and then gelling the resulting emulsion with a gelling agent, the protein gel may give the food an unpleasant feel to the tongue depending on the degree of homogenization of the gel; and the pH of the product, which lowers over time during long-term storage, promotes the deterioration of the gel (lowered strength, partial disintegration, water release, etc.) and thus the gel cannot retain the uniform gel state and edibility (proper firmness and viscosity for easy swallowing) it had when produced.

### DISCLOSURE OF THE INVENTION

An object of the present invention is to provide a nutritionally balanced, refreshing and low pH gel beverage composition for comprehensive nutritional supplementation which is in a soft gel form suitable for eating (drinking) and is capable of stably retaining the form for a long period of time.

The inventors reasoned that they could provide a beverage which enables comprehensive nutritional supplementation and has good edibility if the nutritionally balanced composition, which the inventors previously developed (Japanese Examined Patent Publication No. 1994-83653), could be prepared in the form of a jellylike beverage, and accordingly conducted extensive research. However, when a nutritional composition, containing proteins and fats in relatively high concentrations for comprehensive nutritional supplementation, is adjusted to an acidic pH so as to give a refreshing taste like known jellylike beverages, it was found that the contained proteins coagulate and coagulated proteins damage the uniformity of the gel form, create graininess and spoil the eating characteristics of the gel. It was also found that fat contents separate from the gel and prevent formation of a uniform texture.

The inventors carried out further research and discovered that a gel beverage composition for comprehensive nutritional supplementation which achieves the object mentioned above can be obtained when specific substances are used in certain amounts as shown below. The present invention was accomplished based on this finding and further study.

The present invention provides gel beverage compositions as defined in claims (1) - (7) below and methods for preparing a gel beverage composition as defined in claims (8) - (9).

Claim (1) A gel beverage composition for comprehensive nutritional supplementation having a pH ranging from 3-4 and comprising, based on the total weight of the composition,
5-20% by weight of saccharide,
0.1-5% by weight of lipid,
2.5-6% by weight of protein material which does not coagulate at pH 3-4,
0.2-3% by weight of citric acid,
0.2-1.5% by weight of at least one acid component selected from the group consisting of ascorbic acid, tartaric acid, succinic acid, malic acid, gluconic acid, phosphoric acid, phytic acid, lactic acid and trisodium citrate,
0.01-0.5% by weight of an emulsifying agent,
0.1-1% by weight of agar, and
65-90% by weight of water.

Claim (2) A gel beverage composition as defined in claim (1), wherein the protein material which does not coagulate at pH 3-4 is at least one member selected from the group consisting of protein hydrolysate having a number average molecular weight of 500-10000, whey protein concentrate, whey protein isolate and desalted whey.

Claim (3) A gel beverage composition as defined in claim (2), wherein the protein material which does not coagulate at pH 3-4 is at least one member selected from the group consisting of whey protein concentrate and whey protein isolate.

Claim (4) A gel beverage composition as defined in claim (1), wherein the acid component is at least one member selected from the group consisting of gluconic acid and lactic acid.

Claim (5) A gel beverage composition as defined in claim (1) which further comprises 0.05-0.3% by weight of at least one gelling agent selected from the group consisting of gellan gum, carrageenan, pectin and gelatin.

Claim (6) A gel beverage composition as defined in claim (1) which further comprises 0.05-0.3% by weight of at least one thickening agent selected from the group consisting of guar gum, locust bean gum and xanthan gum.

Claim (7) A gel beverage composition as defined in claim (1) which further comprises 0.05-0.3% by weight of at least one gelling agent selected from the group consisting of gellan gum, carrageenan, pectin and gelatin and 0.05-0.3% by weight of at least one thickening agent selected from the group consisting of guar gum, locust bean gum and xanthan gum.

Claim (8) A method for preparing a gel beverage composition as defined in claim (1) which comprises mixing the components listed below with heating to emulsify them, and cooling the resulting mixture:

| | |
|---|---|
| Saccharide | 5-20% by weight; |
| Fat | 0.1-5% by weight; |
| Protein material which does not coagulate at pH 3-4 | 2.5-6% by weight; |
| Citric acid | 0.2-3% by weight; |
| At least one acid component selected from the group consisting of ascorbic acid, tartaric acid, succinic acid, malic acid, gluconic acid, phosphoric acid, phytic acid, lactic acid and trisodium citrate | 0.2-1.5% by weight; |
| Emulsifying agent | 0.01-0.5% by weight; |
| Agar | 0.1-1% by weight; |
| Water | 65-90% by weight. |

Claim (9) A method for preparing a gel beverage composition as defined in claim (8), wherein the cooling is carried out after the mixture is placed in a container.

In this specification, percentages are by weight unless otherwise specified.

The gel beverage composition for comprehensive nutritional supplementation of the present invention is characterized by a soft gel form especially suitable for drinking, refreshing taste and good storage stability which preserve the gel form and eating characteristics for a long period of time. The gel beverage compositions of the present invention has a "soft gel form" which means, for example, that when the composition of the invention is placed in a container with a spout, it has a fluidity which enables a consumer to easily take it through the spout as well as appropriate firmness and viscosity which create a desirable feel to the tongue and throat. The "refreshing taste" of the gel beverage composition of the invention is given particularly by using citric acid in combination with specific acid component to adjust the pH to an acidic range of 3-4, preferably 3.5-4. The "storage stability" of the gel beverage composition of the invention means, for example, the ability of the composition to retain its pH and gel form substantially as produced when left to stand at 37°C for a month.

Although the composition of the invention has an acidic pH, it does not produce roughness or a grainy feel to the tongue due to aggregation and coagulation of protein. That is, the composition has good eating/drinking characteristics, texture and a smooth and uniform appearance.

Further, the gel beverage composition of the invention, which comprises sufficient and appropriate proportions of saccharide, fat, protein and other nutrients essential to the human body as described above, can effectively supply comprehensive nutrition when ingested.

The components of the gel beverage composition of the invention and the method for preparing the composition of the invention are described below in detail.

### Saccharide

Saccharide is selected from those conventionally used in the field of nutritional supplement compositions. Saccharide, one of the three major nutrients, is stored in the form of glycogen in the liver or muscles and serves as an energy source for physical activity. Examples include monosaccharides such as glucose and fructose; disaccharides such as maltose, sucrose and lactose; sugar alcohols such as xylitol, sorbitol, glycerin and erythritol; polysaccharides such as dextrin and cyclodextrin; and oligosaccharides such as fructooligosaccharide and galactoligosaccharide. These saccharides can be used singly or in combination. When two or more saccharides are used in combination, commercially available saccharide mixtures, for example, isomerized sugar or purified sucrose are of course usable.

Usable saccharides include those serving not only as nutrients but also as sweeteners, such as sucrose. Saccharides serving as sweeteners are preferably used, because they impart sweetness to the gel beverage composition.

The amount of saccharide contained in the gel beverage composition of the invention is about 5-20%, preferably about 10-20%, more preferably about 13-18%. When used within these ranges, saccharide, as a nutritional source, gives the composition of the invention an appropriate amount of nutrition and good balance of components. In particular, saccharide serving as a sweetener can be used in a proportion of preferably about 5-15%, more preferably about 8-13%.

### Fats

Fats can be selected from those conventionally used for nutritional supplement compositions. Fats serve as substitute energy sources for saccharides during, for example, long-term physical exercise. Typical examples of saccharides include long chain fatty acid triglycerides (LCT) as sources of essential fatty acids. Examples of LCT include vegetable oils such as soybean oil, cotton seed oil, safflower oil, corn oil, rice oil, coconut oil, perilla oil, sesame oil and linseed oil; fish oils such as sardine oil and cod liver oil; and oil of Gama. Other examples of fats include C₈-C₁₀ medium chain fatty acid triglycerides (MCT). MCTs are easy to absorb and burn, and difficult to store. The LCTs and MCTs may be used singly, or two or more members independently selected from LCTs or MCTs can be used in combination.

Fats can be added to the gel beverage composition of the invention at a concentration ranging from about 0.1-5%, preferably about 0.1-3%, more preferably about 0.5-3%. Addition of fats within the above ranges can make the composition of the invention satisfactory as a nutritionally balanced supplement composition.

### Emulsifying agent

Fats are soluble in oil but sparingly soluble in water, and thus in the present invention are used in the form of an oil-in-water emulsion. For producing the composition of the invention, it is therefore necessary to use an emulsifying agent in order to emulsify the fat.

The emulsifying agent can be suitably selected from those conventionally used in the field of food products. Considering that the beverage composition of the invention is adjusted to the specified acidic pH, the emulsifying agent preferably has acid resistance.

Typical examples include glycerin fatty acid esters. Useful glycerin fatty acid esters include those known as emulsifying agents in the field of food products, for example, any of those in the categories of highly purified monoglycerides, highly purified diglycerin mono fatty acid esters, polyglycerol esters. Specific examples include commercially available "Sunsoft" (registered trademark, manufactured by TAIYO KAGAKU CO.,LTD.), "Emulsy" (registered trademark, manufactured by RIKEN VITAMIN CO.,LTD.) and "Ryoto" (registered trademark, manufactured by MITSUBISHI CHEMICAL CORPORATION).

In addition to glycerin fatty acid esters, other emulsifying agents used in the field of food products can be used in the present invention. Examples include phosphatides such as egg yolk lecithin, hydrogenated egg yolk lecithin, soybean lecithin and hydrogenated soybean lecithin; synthetic surfactants such as polyoxyethylene monooleate (e.g., commercially available product "Tween 80" (registered trademark) manufactured by AMR); sucrose fatty acid esters; sorbitan fatty acid esters; and propylene glycol fatty acid esters.

Emulsifying agents are not necessarily used singly but two or more of them may be used in combination. They are preferably used in combination. The proportion of emulsifying agent is preferably about 0.01 to 0.5%, more preferably about 0.01 to 0.3%, relative to the amount of the gel beverage composition of the invention. When the gel beverage composition of the invention is prepared using an emulsion or a dispersion preliminarily produced by mixing protein, citric acid and other acids, the appropriate proportion of emulsifying agent is about 1-5%, and preferably about 3-5%, relative to the amount of the emulsion/dispersion.

### Protein material

Protein is one of the three major nutrients, together with saccharide and fat. Protein material is selected from those which do not coagulate at the pH of the gel beverage composition of the invention, i.e., pH 3-4. Examples include proteins such as whey protein concentrate (WPC), whey protein isolate (WPI) and desalted whey; and protein hydrolysates having a number average molecular weight of about 500-10000, preferably about 2000-8000 (and may contain peptides and/or certain amino acids). Among these, WPC and WPI are preferable.

WPC and WPI are whey products obtained by subjecting liquid whey, a by-product produced during the production of milk products such as cheese and casein, to operations such as filtration, ion exchange, crystallization, precipitation and reverse osmosis. Commercially available WPCs are WPC-34, WPC-50, WPC60, WPC75 and WPC80. Although varying slightly depending on manufacturer, the protein content (weight %) of WPCs and WPIs, composition of the major constituents of said protein (weight % relative to total protein content) and contents (weight % of constituents other than proteins) are approximately as shown in Table 1 below (New Food Industry, 25(3), 33 (1983), etc.).

**Table 1**

| | WPC-34 | WPC-50 | WPC-60 | WPC-75 | WPC-80 | WPI |
|---|---|---|---|---|---|---|
| Protein | 34-36 | 50-52 | 60-62 | 75-78 | 80-82 | 90-92 |
| α-Lactoglobulin | 6.5 | 9.5 | 11 | 14 | 15 | 21 |
| β-Lactoglobulin | 16 | 24 | 29 | 36 | 38 | 47 |
| Serum albumin | 1.7 | 2.5 | 3.0 | 3.8 | 4.0 | 1.5 |
| Immunoglobulin | 2.7 | 4.0 | 4.8 | 6.0 | 6.4 | 2.4 |
| Lactose | 48-52 | 33-37 | 25-30 | 10-15 | 4-8 | 0.5-1 |
| Fat | 3-4.5 | 5-6 | 1-7 | 4-9 | 4-8 | 0.5-1 |
| Ash | 6.5-8.0 | 4.5-5.5 | 4-6 | 4-6 | 3-4 | 2-3 |
| Water | 3.0-4.5 | 3.5-4.5 | 3-5 | 3-5 | 3.5-4.5 | 4.5 |
| pH | 6-6.7 | 6-6.7 | 6-6.7 | 6-6.7 | 6-6.7 | 6-6.7 |

Desalted whey is obtained by pasteurizing whey at a low temperature and removing therefrom minerals by precipitation, filtration, dialysis or other separation techniques. Normally, it contains 79% saccharide, 2% fat, 13% protein and less than 7% ash.

Examples of protein hydrolysates having a number average molecular weight of about 500-10000 include proteins which do not coagulate at pH 3-4 and peptides obtained by hydrolyzing common proteins such as casein, gelatin, soybean protein and wheat protein as mentioned below with enzymes and acids to the molecular weight mentioned above. They are usually composed of peptides wherein up to 100 amino acids are connected by peptide linkages. Amino acids may also be included in the protein hydrolysates. Preferable number average molecular weight of the protein hydrolysates is in the range of about 2000-8000.

Protein materials which do not coagulate at pH 3-4 may be used singly or in combination. The amount of the proteins added to the gel beverage composition of the invention is about 2.5-6%, and preferably about 3-5%. Addition of the proteins within the above ranges can make the composition of the invention satisfactory as a nutritionally balanced protein source and a comprehensive nutritional beverage composition.

If necessary, the composition of the invention may contain protein materials which coagulate at an acidic pH, in addition to protein materials which do not coagulate at pH 3-4. Examples include casein, soybean protein and wheat protein; salts of these; fermented products of the proteins mentioned above; extracts of the proteins mentioned above; concentrates of the proteins mentioned above; whole milk powder and skim milk powder. These may be used singly or in combination. Using these protein materials in combination with the protein materials which do not coagulate at pH 3-4 can adjust the balance of protein content and improve taste. Among these protein materials which coagulate at an acidic pH, fermented products, that is, yogurt and cheese, are preferable. It should be understood that the amount of protein materials which coagulate at acidic pH added to the composition of the invention needs to be such that the characteristics of the composition of the invention such as gel form and eating characteristics (feel to the tongue) are not impaired. A suitable amount is less than 1%, relative to the gel beverage composition of the invention.

### Citric acid and acid components

For the gel beverage composition of the invention, it is important to use citric acid in combination with at least one acid component selected from the group consisting of ascorbic acid, tartaric acid, succinic acid, malic acid, gluconic acid, phosphoric acid, phytic acid, lactic acid and trisodium citrate so that the pH is adjusted to 3-4, and preferably 3.5-4.

Citric acid is added to the gel beverage composition of the invention in an amount of about 0.2-3%, and preferably about 0.2-2%, in such an amount to adjust the pH of the composition to 3-4. The use of citric acid in the above-specified range does not impart to the resulting composition too much sourness, which may impair the taste.

As an acid component, the use of at least one member selected from the group consisting of ascorbic acid, tartaric acid, succinic acid, malic acid, gluconic acid, phosphoric acid, phytic acid, lactic acid and trisodium citrate, does not spoil the eating characteristics of the composition but rather increases the refreshing flavor and produces a pH adjusting or buffering effect. Among these acid components, gluconic acid and lactic acid are especially preferable. In addition, ascorbic acid is also preferable since it provides nutrition as vitamin C. Acid components are added to the gel beverage composition of the invention in an amount of about 0.2-1.5%, and preferably about 0.2-1.0%. Such an addition achieves the desired improvement in eating characteristics and pH adjusting or buffering effect.

In this specification, the pH of gels is determined by a measuring method using glass electrodes.

### Agar

The gel beverage composition of the invention uses agar as an essential gelling component. Any agar which is extracted from red algae with hot water extraction, solidifying and drying the extract is useful. Red algae include Tengusa (Gelidium amansii), Ogonori (Gracilaria verrucosa), Obakusa (Pterocladia tenuis) and Itanikusa (Ahnfeltia plicata). Such agar includes agar strings, square agar, agar flakes and agar powder among others. The amount to be added to the composition is 0.1-1%, and preferably 0.2-0.5%. The use of agar within these ranges provide a uniform gel suitable for eating/drinking, which is an object of the present invention.

### Water

Water is also added to the gel beverage composition of the invention in an amount of 65-90%, preferable 70-85%.

### Other gelling agents or thickening agents

In addition to agar, if necessary, the composition of the invention may contain various substances conventionally used as gelling agents or thickening agents in the field of food products. Examples of gelling agents include gellan gum, carrageenan, pectin and gelatin. Examples of thickening agents include furcellaran, locust bean gum, guar gum, gum Arabic and xanthan gum. Among these, a gelling agent selected from gellan gum, carrageenan, pectin and gelatin; and a thickening agent selected from locust bean gum, guar gum and xanthan gum are preferable. These gelling agents and thickening agents can be used singly or in combination. The combination of a gelling agent and a thickening agent is especially preferable. Gelling agents and/or thickening agents exhibit an appropriate gelling ability and gel stabilizing ability and control the gel strength of the resulting gel. When used in combination with agar, they can also mitigate water release and improve the texture of the resulting gel.

Each gelling agent and thickening agent is added to the gel beverage composition of the invention typically in an amount ranging from about 0.05-0.3%.

### Other additives

In addition to the substances mentioned above, if necessary, the gel beverage composition of the invention may contain other appropriate additive substances.

Examples of such substances include sweeteners such as natural sweeteners (other than saccharides) and artificial sweeteners; vitamins and minerals (electrolytes and trace elements); flavoring agents such as natural flavors, synthetic flavors; coloring agents; flavor enhancing substances (chocolate, etc.); food preservatives; natural fruit juices; and natural fruit fleshes.

Examples of natural (non-saccharide) sweeteners include thaumatin, stevia extract (rebaudioside A, etc.) and glycyrrhizin. Examples of artificial sweeteners include saccharin and aspartame.

Examples of vitamins include water-soluble and fat-soluble vitamins such as vitamin A (retinols), vitamin B₁ (thiamine), vitamin B₂ (riboflavin), vitamin B₆ (pyridoxine), vitamin B₁₂ (cyanocobalamin), vitamin D (cholecalciferol and the like), vitamin E (tocopherol), niacin, bisbentiamine, nicotinamide, calcium pantothenate, folic acid, biotin and choline bitartrate.

Examples of minerals (electrolyte and trace elements) include common ones such as sodium chloride, sodium acetate, magnesium sulfate, magnesium chloride, calcium chloride, calcium gluconate, calcium lactate, Schiff calcium, dipotassium phosphate, monosodium phosphoate, calcium glycerophosphate, egg shell calcium, beef bone meal, milk calcium, ferric citrate, ferrous pyrophosphate, ferric pyrophosphate, iron and sodium succinatocitrate, manganese sulfate, copper sulfate, zinc sulfate, sodium iodide, potassium sorbate, zinc, manganese, copper, iodine and cobalt.

Examples of flavoring agents include natural and synthetic flavors such as apple flavor, orange flavor, grapefruit flavor and lemon flavor.

Examples of coloring agents include red No.2, red No.3, green No.3, blue No.1, blue No. 2, yellow No.4, yellow No.5, red cabbage color, orange color, gardenia color, chlorophyll, perilla color, tomato color and sufflower color.

Examples of flavor enhancing substances include chocolate.

Examples of food preservatives include butyl hydroxyanisole (BHA), dibutylhydroxytoluene (BHT), sodium nitrate, sodium nitrite, disodium ethylenediaminetetraacetate (EDTA·2Na), tert-butylhydroquinone (TBHQ), benzoic acid, Japanese styrax benzoin extract, rumput roman extract, hinokitiol extract, pectin digests, Magnolia obovata extract and forsythia extract.

Examples of natural fruit juices and natural fruit fleshes include those of apple, green apple, orange, tangerine, grapefruit, peach, strawberry, muscat, grape, pineapple, lemon, European pear, lychee, blueberry, mango and banana.

Among these, vitamins and minerals are desirably added since they help to provide comprehensive nutritional supplementation. Examples of especially preferable vitamins include a multivitamin preparation containing vitamins in the amounts listed below (in 200g of the composition of the invention, further containing 1-500 mg of vitamin C).

| | |
|---|---|
| Vitamin A | 10-2000IU |
| Vitamin B₁ | 0.01-3.0 mg |
| Vitamin B₂ | 0.01-3.1 mg |
| Vitamin B₆ | 0.01-3.2 mg |
| Vitamin B₁₂ | 0.1-30 µg |
| Vitamin D | 1-300IU |
| Vitamin E | 1-100IU |
| Nicotinamide | 0.1-30 mg |
| Calcium pantothenate | 0.1-31 mg |
| Folic acid | 0.01-3.0 mg |

These additive components may be used singly or in combination. The amount of these components to be added is not limited. Normally, the total amount of additive components other than natural fruit juices and natural fruit fleshes is less than 2 parts by weight per 100 parts by weight of the gel beverage composition of the invention. Natural fruit juices and natural fruit fleshes can be included up to 50 parts by weight or less per 100 parts by weight of the gel beverage composition of the invention in total.

### Preparation of the composition of the invention

The composition of the invention is prepared by mixing the specified amount of the components mentioned above with the specific amount of water with heating, emulsifying the mixture and then cooling the mixture. Such emulsification can be conducted by adding all the components to water at once and then carrying out a minor mechanical operation such as stirring. Alternatively, it can be conducted by preliminarily preparing an aqueous solution of the water-soluble components, adding to the solution the oil-soluble components and an emulsifying agent or a mixture thereof and subjecting them to a similar mechanical operation such as stirring. Normally, the latter is preferable to obtain a more uniformly emulsified mixture.

The mixing operation (emulsifying operation) of the components mentioned above may be conducted at room temperature, but preferably with heating. The emulsifying operation can be conducted in a conventional manner with a suitable homogenizer, for example, homomixer, high-pressure homogenizer or the like, by complete passage process or circulation process.

A specific example of particularly preferable methods for preparing the composition of the invention is as follows: To a liquid mixture (dispersion) of protein materials, citric acid and water, are added fats, emulsifying agents, saccharide and other additive components. The obtained emulsion is heated to about 60°C. The emulsion is then mixed with a solution prepared by dissolving agar and other gelling agents or thickening agents by heating in water which had been previously heated to about 80°C.

The desired gel beverage product is obtainable by cooling the above-mentioned emulsion, preferably by placing the emulsion in a suitable container, sterilizing and cooling the emulsion. Suitable containers are any of those made of plastics and used for beverages of this kind. Examples of materials include polyethylene, polypropylene, stretched polyamide, polyethylene terephthalate, EVAL (registered trademark, ethylene-vinyl alcohol copolymer resin, manufactured by KURARAY CO.,LTD.) and composite materials produced by laminating these resins and aluminum, paper or the like. Examples of commercially available containers include Soft Pouch (manufactured by FUJI SEAL, INC.), Bottled Pouch (registered trademark, manufactured by TOPPAN PRINTING CO., LTD.), Spouch (registered trademark, manufactured by DAI NIPPON PRINTING CO.,LTD.) and Cheerpack (registered trademark, manufactured by HOSOKAWA YOKO Co., Ltd.). Sterilization can be performed in a conventional manner such as by heating. In this case, sterilization also serves as heating and thus makes preceding heating unnecessary.

The thus-prepared gel beverage product of the present invention has excellent edibility and safety, and the product, when ingested, effectively provides fully-balanced nutrition.

### BEST MODE FOR CARRYING OUT THE INVENTION

Below the present invention will be described in further detail with reference to Examples. In these Examples, parts and percentages are by weight unless otherwise specified.

### Examples 1-4

To water were added the specified amounts of the ingredients listed in Table 2 below and a suitable amount of other ingredients: a mineral, vitamin and flavor. Each mixture was stirred, emulsified and heated to 80°C. A 200 g portion of each mixture was placed in a Spouch (registered trademark, manufactured by DAI NIPPON PRINTING CO., LTD.) and sterilized with heating at 80°C for 10 minutes. The containers were then cooled, giving gel beverage products of the present invention contained in a pouch. In these products, calcium gluconate was used as the mineral, the multi-vitamin preparation mentioned above as the vitamin and apple flavor as the flavor.

All the gel beverages of the invention obtained above had uniform and smooth surface appearances and had soft gel forms.

**Table 2**

| Ingredients (%) | Example | | | |
|---|---|---|---|---|
| | 1 | 2 | 3 | 4 |
| Saccharide | | | | |
| Sucrose | 10.0 | - | 5.0 | - |
| Fructose | - | 10.0 | 5.0 | - |
| Oligosaccharide | - | - | - | 15.0 |
| Fat | | | | |
| Rice oil | 2.0 | - | - | 1.0 |
| Corn oil | - | 2.0 | - | 1.0 |
| Soybean oil | - | - | 2.0 | - |
| Protein material | | | | |
| WPI | 6.0 | - | 4.0 | - |
| WPC | - | 4.0 | - | 4.0 |
| Enzymatically decomposed gelatin | - | - | 1.0 | 1.0 |
| Citric acid | 0.8 | 0.7 | 1.0 | 0.8 |
| Acid component | | | | |
| Malic acid | 0.4 | - | - | - |
| Ascorbic acid | - | 0.4 | - | - |
| Gluconic acid | - | - | 0.6 | 0.6 |
| Emulsifying agent | | | | |
| Glycerin fatty acid ester | 0.2 | - | - | 0.1 |
| Sucrose fatty acid ester | - | 0.2 | - | 0.1 |
| Lecithin | - | - | 0.2 | - |
| Agar | 0.6 | 0.5 | 0.5 | 0.5 |
| Thickening agent | | | | |
| Guar gum | - | 0.1 | - | - |
| Locust bean gum | - | - | 0.1 | - |
| Xanthan gum | - | - | - | 0.1 |
| Water | 80.0 | 82.1 | 80.6 | 75.8 |
| Energy (Kcal/100 g) | 79.6 | 70.8 | 76.0 | 94.4 |
| pH | 3.9 | 3.7 | 3.7 | 3.9 |

The explanation of ingredients shown in Tables 2 and 3 (shown below) is provided below:
WPI: WPI shown in Table 1 was used.
WPC: WPC-80 shown in Table 1 was used.

### Enzymatically decomposed gelatin:

Enzymatically decomposed gelatin having a number average molecular weight of about 8000 or less

The energies were calculated by the following equation: (4 x saccharide content) + (9 x fat content) + (4 x protein content). The energies are in kcal per 100 g of the samples.

### Examples 5-10

Dispersions were prepared by mixing protein materials, citric acid, acid components and a portion of the water (50%) listed in Table 3 below. Subsequently, the specified amounts of fats, saccharides, emulsifying agents and thickening agents shown in Table 3 and other ingredients, e.g., a suitable amount of minerals, vitamins and flavors, were added to the dispersions. The mixtures were stirred and heated to 60°C, giving solutions A. Meanwhile, the remaining water portions were heated to 80°C or higher, and to these were added agar and other gelling agents. These mixtures were stirred and dissolved, giving solutions B.

The solutions A and B were mixed. A 200 g portion of each mixture was placed in a Spouch, sterilized by heating at 80°C for 10 minutes, and cooled, giving a gel beverage product of the invention contained in a pouch.

All the gel beverages of the invention obtained above had a surface uniform and smooth in appearance and a soft gel form.

**Table 3**

| Ingredients (%) | Example | | | | | |
|---|---|---|---|---|---|---|
| | 5 | 6 | 7 | 8 | 9 | 10 |
| Saccharide | | | | | | |
| Sucrose | - | - | 10.0 | 10.0 | - | 5.0 |
| Fructose | - | - | - | - | 10.0 | - |
| Oligosaccharide | - | - | 5.0 | - | - | - |
| Dextrin | 15.0 | 20.0 | - | 5.0 | 5.0 | 15.0 |
| Fat | | | | | | |
| Rice oil | 1.0 | - | 2.0 | - | - | 4.0 |
| Corn oil | - | 1.0 | - | 2.0 | - | - |
| Soybean oil | 1.0 | 1.0 | - | - | 1.0 | - |
| Protein material | | | | | | |
| WPI | 4.0 | 4.0 | - | 4.0 | - | 4.0 |
| WPC | - | - | 4.0 | - | 4.0 | - |
| Skim milk powder | - | - | 0.5 | - | - | - |
| Soybean protein | 0.5 | - | - | 0.2 | 0.2 | - |
| Wheat protein | - | 0.5 | - | - | - | 0.2 |
| Citric acid | 0.8 | 1.0 | 0.5 | 0.5 | 0.5 | 0.5 |
| Acid component | | | | | | |
| Ascorbic acid | - | - | 0.5 | 0.7 | - | - |
| Gluconic acid | - | - | - | 0.3 | 0.5 | - |
| Phosphoric acid | 0.3 | - | 0.3 | - | - | 0.5 |
| Lactic acid | - | 0.2 | - | - | 0.3 | 0.3 |
| Emulsifying agent | | | | | | |
| Glycerin fatty acid ester | 0.1 | - | 0.1 | - | - | 0.4 |
| Sucrose fatty acid ester | - | 0.1 | 0.05 | 0.2 | - | - |
| Lecithin | 0.1 | 0.1 | 0.05 | - | 0.12 | - |
| Agar | 0.4 | 0.4 | 0.4 | 0.4 | 0.3 | 0.3 |
| Other gelling agent | | | | | | |
| Gellan gum | 0.1 | - | - | - | 0.1 | - |
| Carrageenan | - | 0.1 | - | - | - | 0.05 |
| Pectin | - | - | 0.1 | - | - | - |
| Gelatin | - | - | - | 0.2 | - | - |
| Thickening agent | | | | | | |
| Guar gum | - | - | - | - | 0.1 | - |
| Locust bean gum | - | - | - | - | - | 0.1 |
| Water | 76.7 | 71.6 | 76.5 | 76.5 | 77.9 | 69.7 |
| Energy (Kcal/100 g) | 92.9 | 113.1 | 91.5 | 93.0 | 82.4 | 131.0 |
| pH | 3.7 | 3.8 | 3.8 | 3.8 | 3.8 | 3.7 |

### Test Example 1

The influence of the acids used in the invention on the sourness of the obtained gel beverages was examined by sensory tests.

Samples 1-7 of the gel beverages of the invention and comparative beverage samples 1-3 were prepared by adding the ingredients listed below to water and following the procedure of Example 1.

| | |
|---|---|
| Sucrose and dextrin as saccharide (7:3 mixture) | 16.1% |
| Corn oil as fat | 0.6% |
| WPC (shown in Table 1) as a protein material which does not coagulate at pH 3-4 | 6.1% |
| Glycerin fatty acid ester as an emulsifying agent | 0.02% |
| Agar | 0.3% |
| Guar gum as a thickening agent | 0.1% |
| Citric acid | Amount (%) shown in Table 4 |
| Acid component | Amount (%) shown in Table 4 |

Ten panelists were asked to drink the obtained samples and the sourness thereof was rated on the following scale.
3: The sample has agreeable sourness.
2: The sample is somewhat sour.
1: The sample has excessive sourness.

The results are shown in Table 4. The results of the sensory tests are expressed as the total scores of the evaluations of the 10 panelists.

All the samples of the invention had refreshing taste since they all had a pH ranging from 3.7-4.0.

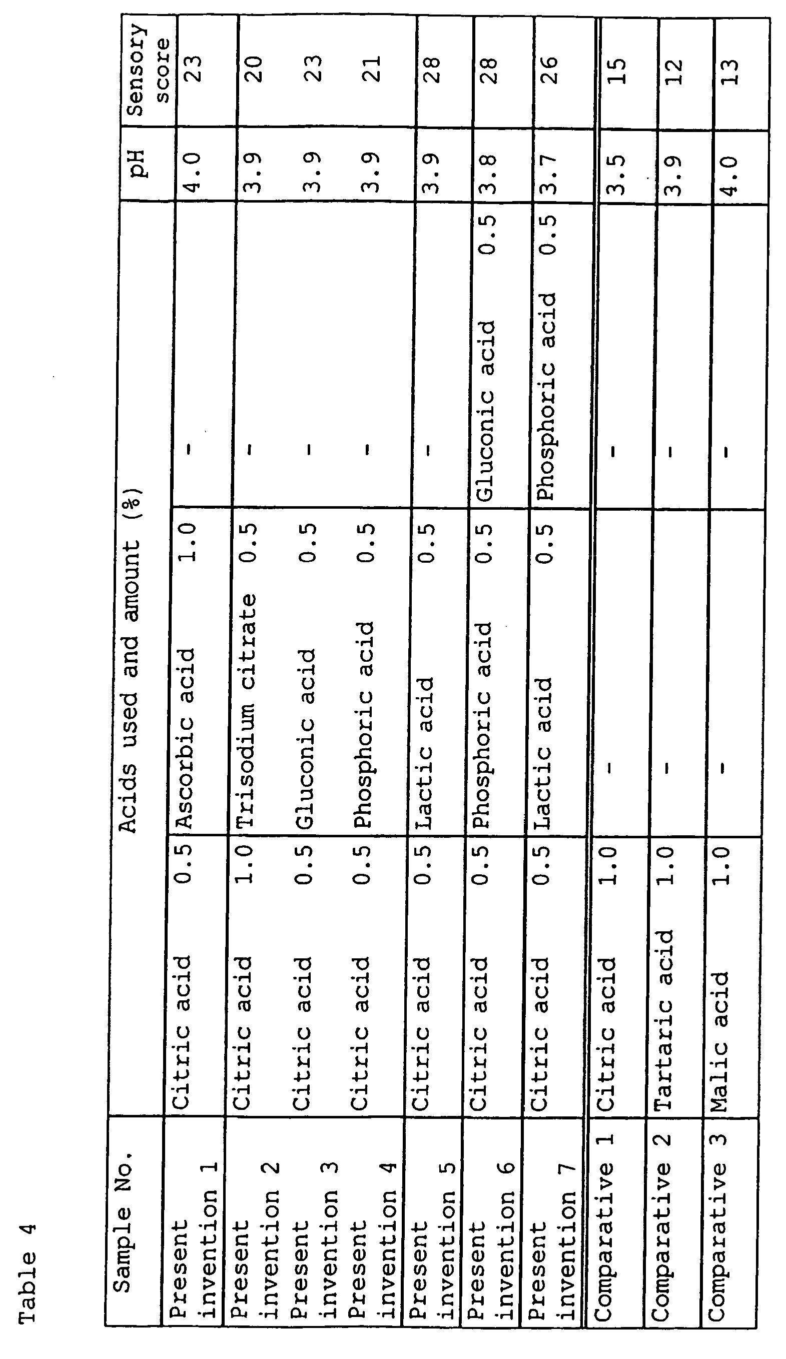

As shown in Table 4, the samples of the gel beverages of the invention, which were prepared by using citric acid in combination with one or more acid components were evaluated as having agreeable sourness or somewhat sour in the sensory tests, while all the comparative beverages prepared by using only citric acid or other acids alone were evaluated as too sour.

### Test Example 2

Changes (decrease) in pH and firmness over time of the gel beverage compositions of the invention and comparative beverage compositions were determined.

Samples of the gel beverages of the invention (products of the present invention) and comparative beverages (comparative products) were prepared by using the ingredients shown in Table 5 and following the procedure of Test Example 1.

**Table 5**

| Composition (%) | Product of present invention | Comparative product |
|---|---|---|
| Saccharides (sucrose + dextrin = 7 : 3) | 16.0 | 16.0 |
| Fat (corn oil) | 2.1 | 2.1 |
| Protein material which does not coagulate at pH 3-4 (WPI) | 2.9 | 2.9 |
| Emulsifying agent (glycerin fatty acid ester) | 0.1 | 0.1 |
| Agar | 0.3 | 0.3 |
| Thickening agent (guar gum) | 0.1 | 0.1 |
| Citric acid | 0.42 | 0.21 |
| Lactic acid | 0.09 | - |
| Water | 78.0 | 78.3 |

The obtained samples were stored at room temperature (25°C) for a month, at 37°C for a month, or at 50°C for a week. Each sample was tested immediately after production and after storage for their pH and gel forms. Ten panelists conducted sensory tests to evaluate the gel forms on the scale given below. Panel test results are expressed as the total scores of all panelists. When the total score was 20 and higher, the gel strength is considered good, when 15-19 the gel strength is considered weak, and when 14 or lower the gel strength is considered insufficient.
3 points: Has an agreeable feel to the mouth and a soft gel form.
2 points: Has a weak soft gel form (inferior feel to the mouth).
1 point: The formation of the gel is very weak. (The gel is liquidized due to poor shape retention.)

The results are shown in Table 6 below.

**Table 6**

| Sample | | Present invention | | | Comparative product | | |
|---|---|---|---|---|---|---|---|
| | | pH | Gel strength | Panel test | pH | Gel strength | Panel test |
| Room temperature | At start of test | 3.78 | Good | 28 | 3.99 | Good | 25 |
| | After 1 month | 3.77 | Good | 28 | 3.99 | Good | 23 |
| 37°C | At start of test | 3.78 | Good | 28 | 3.99 | Good | 25 |
| | After 1 month | 3.78 | Good | 23 | 3.80 | Insufficient | 14 |
| 50°C | At start of test | 3.78 | Good | 28 | 3.99 | Good | 25 |
| | After 1 week | 3.77 | Good | 21 | 3.95 | Weak | 16 |

As seen from the results shown in Table 6, almost no pH or gel firmness reduction was found in the samples of the gel beverages of the invention either stored at 37°C for 1 month or stored at 50°C for one week. In contrast, the comparative samples, after 1 month of storage at 37°C, had a greatly lowered pH, could not retain gel state and had a state close to sol, and after one week of storage at 50°C, their pH decreased slightly, but they had weakened gel state.

### Test Example 3

In this test, the gel beverage composition of the invention was left to stand at a high temperature and the stability (heat resistance of the gel) was evaluated by sensory tests.

The samples of the gel beverages of the invention (products of the present invention) and comparative beverage samples (comparative products) were prepared by using the specified amounts of the ingredients shown in Table 7 and following the procedure of Test Example 1.

**Table 7**

| Composition (%) | Product of the present invention | Comparative product |
|---|---|---|
| Saccharide (sucrose + dextrin = 7 : 3) | 16.1 | 16.1 |
| Fat (corn oil) | 0.6 | 0.6 |
| Protein material which does not coagulate at pH 3-4 (WPI) | 6.1 | 6.1 |
| Emulsifying agent (glycerin fatty acid ester) | 0.02 | 0.02 |
| Agar | 0.3 | 0.3 |
| Thickening agent (guar gum) | 0.1 | 0.1 |
| Citric acid | 0.39 | 0.83 |
| Gluconic acid | 0.352 | - |
| Phosphoric acid | 0.085 | - |
| Water | 76.0 | 76.0 |

The obtained samples were left to stand at 65°C, 70°C, 75°C, 80°C or 85°C for 1 minute, 2 minutes, 3 minutes, 5 minutes, 10 minutes, 20 minutes, 30 minutes, 40 minutes, 50 minutes or 60 minutes. The samples were then cooled and 10 panelists were asked to drink them and the form of the sample gels was rated on the scale below.
A: Has an agreeable feel to the mouth and a soft gel form.
B: Has a weak soft gel form (inferior feel to the mouth).
C: The formation of the gel is very weak. (The gel is liquidized due to poor shape retention.)

The results are shown in Table 8 below.

**Table 8**

| Standing time (min.) | | 1 | 2 | 3 | 5 | 10 | 20 | 30 | 40 | 50 | 60 |
|---|---|---|---|---|---|---|---|---|---|---|---|
| 65°C | Present invention | A | A | A | A | A | A | A | A | A | A |
| | Comparative | A | A | A | A | A | A | A | A | B | - |
| 70°C | Present invention | A | A | A | A | A | A | A | A | A | - |
| | Comparative | A | A | A | A | A | A | B | C | - | - |
| 75°C | Present invention | A | A | A | A | A | A | A | A | B | B |
| | Comparative | A | A | A | A | A | B | C | - | - | - |
| 80°C | Present invention | A | A | A | A | C | - | - | - | - | - |
| | Comparative | A | A | C | - | - | - | - | - | - | - |
| 85°C | Present invention | A | A | A | - | - | - | - | - | - | - |
| | Comparative | B | C | - | - | - | - | - | - | - | - |

As seen from Table 8, the gels which constitute the samples of the gel beverages of the invention resist deterioration at high temperatures, that is, are highly heat-resistant.

As seen from all of the above, the gel beverage of the invention can be eaten/drunk with good eating/drinking characteristics and safety, and taking the gel beverage can provide well-balanced nutrition. The food product of the present invention is also useful for sports players who wish to quickly supply nutrients during exercise.

### Industrial Applicability

The present invention provides a gel beverage composition for comprehensive nutritional supplementation, which contains balanced nutritional components, has refreshing taste, a low pH, a soft gel form suitable for eating (drinking) and the ability to retain its shape in the long term. By taking the composition, one can improve an unbalanced diet and supplement energy and nutrients needed for physical activities; prevent, prevent and treat (prevent aggravation of) various diseases caused by excessive caloric intake (such as obesity), for example, diabetes, hypertension and heart diseases.

## Claims

1. A gel beverage composition for comprehensive nutritional supplementation having a pH ranging from 3-4 and comprising, based on the total weight of the composition,
5-20% by weight of saccharide,
0.1-5% by weight of fat,
2.5-6% by weight of protein material which does not coagulate at pH 3-4,
0.2-3% by weight of citric acid,
0.2-1.5% by weight of at least one acid component selected from the group consisting of ascorbic acid, tartaric acid, succinic acid, malic acid, gluconic acid, phosphoric acid, phytic acid, lactic acid and trisodium citrate,
0.01-0.5% by weight of an emulsifying agent,
0.1-1% by weight of agar, and
65-90% by weight of water.

2. A gel beverage composition as defined in claim 1, wherein the protein material which does not coagulate at pH 3-4 is at least one member selected from the group consisting of protein hydrolysate having a number average molecular weight of 500-10000, whey protein concentrate, whey protein isolate and desalted whey.

3. A gel beverage composition as defined in claim 2, wherein the protein material which does not coagulate at pH 3-4 is at least one member selected from the group consisting of whey protein concentrate and whey protein isolate.

4. A gel beverage composition as defined in claim 1, wherein the acid component is at least one member selected from the group consisting of gluconic acid and lactic acid.

5. A gel beverage composition as defined in claim 1 which further comprises 0.05-0.3% by weight of at least one gelling agent selected from the group consisting of gellan gum, carrageenan, pectin and gelatin.

6. A gel beverage composition as defined in claim 1 which further comprises 0.05-0.3% by weight of at least one thickening agent selected from the group consisting of guar gum, locust bean gum and xanthan gum.

7. A gel beverage composition as defined in claim 1 which further comprises 0.05-0.3% by weight of at least one gelling agent selected from the group consisting of gellan gum, carrageenan, pectin and gelatin and 0.05-0.3% by weight of at least one thickening agent selected from the group consisting of guar gum, locust bean gum and xanthan gum.

8. A method for preparing a gel beverage composition as defined in claim 1 which comprises mixing the components listed below with heating to emulsify them, and cooling the resulting mixture:
| | |
|---|---|
| Saccharide | 5-20% by weight; |
| Fat | 0.1-5% by weight; |
| Protein material which does not coagulate at pH 3-4 | 2.5-6% by weight; |
| Citric acid | 0.2-3% by weight; |
| At least one acid component selected from the group consisting of ascorbic acid, tartaric acid, succinic acid, malic acid, gluconic acid, phosphoric acid, phytic acid, lactic acid and trisodium citrate | 0.2-1.5% by weight; |
| Emulsifying agent | 0.01-0.5% by weight; |
| Agar | 0.1-1% by weight; |
| Water | 65-90% by weight. |

9. A method for preparing a gel beverage composition as defined in claim 8, wherein the cooling is carried out after the mixture is placed in a container.

## Patentansprüche

1. Gelgetränkezusammensetzung zur umfassenden Nahrungsergänzung mit einem pH-Wert im Bereich von 3-4, die auf Basis des Gesamtgewichts der Zusammensetzung folgendes umfasst:
5-20 Gew.-% Saccharid,
0,1-5 Gew.-% Fett,
2,5-6 Gew.-% Proteinmaterial, das bei einem pH-Wert von 3-4 nicht koaguliert,
0,2-3 Gew.-% Zitronensäure,
0,2-1,5 Gew.-% mindestens einer Säurekomponente, ausgewählt aus Ascorbinsäure, Weinsäure, Bernsteinsäure, Apfelsäure, Gluconsäure, Phosphorsäure, Phytinsäure, Milchsäure und Trinatriumcitrat,
0,01-0,5 Gew.-% eines Emulgators,
0,1-1 Gew.-% Agar und
65-90 Gew.-% Wasser.

2. Gelgetränkezusammensetzung gemäß Anspruch 1, worin das Proteinmaterial, das bei einem pH-Wert von 3-4 nicht koaguliert, mindestens eines ist, ausgewählt aus einem Proteinhydrolysat mit einem Zahlendurchschnitts-Molekulargewicht von 500 bis 10.000, Molkeproteinkonzentrat, Molkeproteinisolat und entsalzter Molke.

3. Gelgetränkezusammensetzung gemäß Anspruch 2, worin das Proteinmaterial, das bei einem pH-Wert von 3-4 nicht koaguliert, mindestens eines ist, ausgewählt aus Molkeproteinkonzentrat und Molkeproteinisolat.

4. Gelgetränkezusammensetzung gemäß Anspruch 1, worin die saure Komponente mindestens eines ist, ausgewählt aus Gluconsäure und Milchsäure.

5. Gelgetränkezusammensetzung gemäß Anspruch 1, die ferner 0,05-0,3 Gew.-% mindestens eines Geliermittels, ausgewählt aus Gelangummi, Carrageen, Pectin und Gelatine, umfasst.

6. Gelgetränkezusammensetzung gemäß Anspruch 1, die ferner 0,05-0,3 Gew.-% mindestens eines Verdickungsmittels, ausgewählt aus Guargummi, Robinienbohnengummi und Xanthangummi, umfasst.

7. Gelgetränkezusammensetzung gemäß Anspruch 1, die ferner 0,05-0,3 Gew.-% mindestens eines Geliermittels, ausgewählt aus Gelangummi, Carrageen, Pectin und Gelatine, und 0,05-0,3 Gew.-% mindestens eines Verdickungsmittels, ausgewählt aus Guargummi, Robinienbohnengumi und Xanthangummi, umfasst.

8. Verfahren zur Herstellung einer Gelgetränkezusammensetzung wie in Anspruch 1 definiert, das das Vermischen der unten aufgeführten Komponenten unter Erwärmen, wodurch diese emulgiert werden, und Abkühlen der resultierenden Mischung umfasst:
| | |
|---|---|
| Saccharid | 5-20 Gew.-%; |
| Fett | 0,1-5 Gew.-% |
| Proteinmaterial, das bei einem pH-Wert von 3-4 nicht koaguliert | 2,5-6 Gew.-% |
| Zitronensäure | 0,2-3 Gew.-% |
| Mindestens eine saure Komponente, ausgewählt aus Ascorbinsäure, Weinsäure, Bernsteinsäure, Apfelsäure, Gluconsäure, Phosphorsäure, Phytinsäure, Milchsäure und Trinatriumcitrat | 0,2-1,5 Gew.-% |
| Emlugator | 0,01-0,5 Gew.-% |
| Agar | 0,1-1 Gew.-% |
| Wasser | 65-90 Gew.-% |

9. Verfahren zur Herstellung einer Gelgetränkezusammensetzung gemäß Anspruch 8, worin das Abkühlen durchgeführt wird, nachdem die Mischung in einen Behälter gegeben wurde.

## Revendications

1. Composition de boisson gélifiée pour un complément nutritionnel complet ayant un pH dans la plage de 3 à 4 et comprenant, sur la base du poids total de la composition,
de 5 à 20 % en poids de saccharide,
de 0,1 à 5 % en poids de graisses,
de 2,5 à 6 % en poids de matériau protéique qui ne coagule pas à un pH de 3 à 4,
de 0,2 à 3 % en poids d'acide citrique,
de 0,2 à 1,5 % en poids d'au moins un composant acide choisi dans le groupe constitué de l'acide ascorbique, l'acide tartrique, l'acide succinique, l'acide malique, l'acide gluconique, l'acide phosphorique, l'acide phytique, l'acide lactique et le citrate trisodique,
de 0,01 à 0,5 % en poids d'un agent émulsifiant,
de 0,1 à 1 % en poids d'agar-agar, et
de 65 à 90 % en poids d'eau.

2. Composition de boisson gélifiée selon la revendication 1, dans laquelle le matériau protéique qui ne coagule pas à un pH de 3 à 4 est au moins un membre choisi dans le groupe constitué d'un hydrolysat de protéine ayant un poids moléculaire moyen en nombre de 500 à 10000, un concentré de protéine de lactosérum, un isolat de protéine de lactosérum et le lactosérum dessalé.

3. Composition de boisson gélifiée selon la revendication 2, dans laquelle le matériau protéique qui ne coagule pas à un pH de 3 à 4 est au moins un membre choisi dans le groupe constitué d'un concentré de protéine de lactosérum et un isolat de protéine de lactosérum.

4. Composition de boisson gélifiée selon la revendication 1, dans laquelle le composant acide est au moins un membre choisi dans le groupe constitué de l'acide gluconique et l'acide lactique.

5. Composition de boisson gélifiée selon la revendication 1 qui comprend en outre de 0,05 à 0,3 % en poids d'au moins un agent de gélification choisi dans le groupe constitué de la gomme gellane, la carraghénine, la pectine et la gélatine.

6. Composition de boisson gélifiée selon la revendication 1 qui comprend en outre de 0,05 à 0,3 % en poids d'au moins un agent épaississant choisi dans le groupe constitué de la gomme de guar, la gomme de caroube et la gomme xanthane.

7. Composition de boisson gélifiée selon la revendication 1 qui comprend en outre de 0,05 à 0,3 % en poids d'au moins un agent de gélification choisi dans le groupe constitué de la gomme gellane, la carraghénine, la pectine et la gélatine et de 0,05 à 0,3 % en poids d'au moins un agent épaississant choisi dans le groupe constitué de la gomme de guar, la gomme de caroube et la gomme xanthane.

8. Procédé de préparation d'une composition de boisson gélifiée selon la revendication 1 qui comprend le mélange des composants listés ci-dessous sous chauffage pour les émulsifier, et le refroidissement du mélange résultant :
| | |
|---|---|
| Saccharide | 5 à 20 % en poids ; |
| Graisses | 0 à 1,5 % en poids |
| Matériau protéique qui ne coagule pas à un pH de 3 à 4 | 2,5 à 6 % en poids ; |
| Acide citrique | 0,2 à 3 % en poids ; |
| au moins un composant acide choisi dans le groupe constitué de l'acide ascorbique, l'acide tartrique, l'acide succinique, l'acide malique, l'acide gluconique, l'acide phosphorique, l'acide phytique, l'acide lactique et le citrate trisodique | 0,2 à 1,5 % en poids; |
| Agent émulsifiant | 0,01 à 0,5 % en poids ; |
| Agar-agar | 0,1 à 1 % en poids; |
| Eau | 65 à 90% en poids. |

9. Procédé pour préparer une composition de boisson gélifiée selon la revendication 8, dans lequel le refroidissement est réalisé après que le mélange ait été placé dans un récipient.
